# EUROPEAN PATENT SPECIFICATION

(11) **EP 4 216 234 B1**
(45) Date of publication and mention of the grant of the patent: **02.04.2025**
(21) Application number: 20953572.3
(22) Date of filing: 16.09.2020
(51) Int. Cl.: G21C 7/08, G21C 3/328, G21C 7/06

(54) **SMALL NUCLEAR POWER REACTOR CORE AND SHIP**
KLEINER KERN EINES KERNKRAFTREAKTORS UND SCHIFF
COEUR DE RÉACTEUR NUCLÉAIRE DE PETITE TAILLE ET BÂTIMENT

(43) Date of publication of application: 26.07.2023
(73) Proprietor: China Nuclear Power Technology Research Institute Co., Ltd, Shenzhen, Guangdong 518031 (CN); China General Nuclear Power Corporation, Shenzhen, Guangdong 518028 (CN); CGN Power Co., Ltd, Shenzhen, Guangdong 518028 (CN)
(72) Inventor: WANG, Xinxin, Shenzhen, Guangdong 518031 (CN); DUAN, Rong, Shenzhen, Guangdong 518031 (CN); GAO, Wei, Shenzhen, Guangdong 518031 (CN); PAN, Hui, Shenzhen, Guangdong 518031 (CN); CAI, Dechang, Shenzhen, Guangdong 518031 (CN); LU, Xianghui, Shenzhen, Guangdong 518031 (CN); RUI, Min, Shenzhen, Guangdong 518031 (CN); YU, Chao, Shenzhen, Guangdong 518031 (CN); HE, Mingtao, Shenzhen, Guangdong 518031 (CN)
(74) Representative: Westphal, Mussgnug & Partner, Patentanwälte mbB
(86) International application number: PCT/CN2020/115548
(87) International publication number: WO 2022/056713

(56) References cited:
- CN-A- 104 952 493
- CN-A- 105 139 908
- CN-A- 106 297 908
- CN-A- 111 508 622
- CN-U- 207 895 854
- CN-U- 207 895 854
- JP-A- 2004 020 463
- US-A- 4 642 216
- US-B1- 6 445 759
- JO BUM HEE ET AL: "Investigation on long-term daily load follow operation capability of soluble boron-free SMR", ANNALS OF NUCLEAR ENERGY, PERGAMON PRESS, OXFORD, GB, vol. 149, 2 September 2020 (2020-09-02), XP086293772, ISSN: 0306-4549, [retrieved on 20200902], DOI: 10.1016/J.ANUCENE.2020.107764
- MOHD-SYUKRI YAHYA ET AL: "An innovative core design for a soluble-boron-free small pressurized water reactor", INTERNATIONAL JOURNAL OF ENERGY RESEARCH, WILEY, CHICHESTER, GB, vol. 42, no. 1, 19 July 2017 (2017-07-19), pages 73 - 81, XP071644464, ISSN: 0363-907X, DOI: 10.1002/ER.3792
- SADEGH-NOEDOOST A ET AL: "Investigations of the fresh-core cycle-length and the average fuel depletion analysis of the NuScale core", ANNALS OF NUCLEAR ENERGY, PERGAMON PRESS, OXFORD, GB, vol. 136, 23 September 2019 (2019-09-23), XP085885684, ISSN: 0306-4549, [retrieved on 20190923], DOI: 10.1016/J.ANUCENE.2019.106995

## Description

### FIELD OF THE INVENTION

The present invention relates to the field of nuclear power, and more particularly, to a small nuclear power reactor core and a ship.

### DESCRIPTION OF THE RELATED ART

Small marine reactors can provide sufficient power and heat supply for the exploitation of marine resources, the defense of islands and reefs, the life and production of island residents. Because of the small layout space on the ship, restriction in radioactive waste discharge and high safety requirements, a compact boron-insoluble core design is the only choice, in which the reactivity of the core can be controlled only by means of control rods. The control capability in this way is less than that of the boron-modulated core and, which means the arrangement, function and control mode of the control rods need to be designed to meet the operational requirements.

The excess reactivity of existing PWRs is controlled by soluble boron and combustible poison rods dissolved in a primary circuit coolant. In order to realize the cold shutdown of the reactor and have a certain shutdown depth, concentrated boric acid needs to be added to the coolant. In reactivity control, boric acid is mainly used to control large and slow reactivity changes, such as reactivity changes caused by coolant temperature changes, transient changes in xenon and samarium, and burn-up of combustible poisons. At the same time, due to the presence of boron, accidental dilution accidents may also occur.

Publication CN 207 895 854 U is considered to be relevant to the present application.

### SUMMARY OF THE INVENTION

In view of the above-mentioned defects of the prior art, the technical problem to be solved by the present invention is to provide a small nuclear power reactor core and a ship. This problem is solved by a small nuclear power reactor core having the features of claim 1 and by a ship having the features of claim 10.

The technical solution adopted by the present invention to solve the technical problem is constructing a small nuclear power reactor core, which includes a plurality of fuel assemblies arranged in an array, and a control rod group arranged according to a set rule. The control rod group includes:
a power compensation rod group for adjusting a power of the reactor core by adjusting an insertion depth of the power compensation rod group;
a reactivity adjustment rod group for compensating changes in reactivity of the reactor core caused by fuel burn-up and changes in xenon concentration by adjusting an insertion depth of the reactivity adjustment rod group;
a temperature adjustment rod group for adjusting an average temperature of the reactor core by adjusting an insertion depth of the temperature adjustment rod group; and
a shutdown rod group for providing additional negative reactivity to ensure a sufficient shutdown depth during shutdown of the reactor core.

Further, in the small nuclear power reactor core of the present invention, the fuel assemblies comprise thirty-seven groups of fuel assemblies, and the control rod group comprises twenty-one control rods;
wherein the control rods are all made of strong neutron absorbing material, and the control rods are inserted into the fuel assemblies in the same location; the thirty-seven groups of fuel assemblies are arranged in a 7×7 checkerboard pattern, (m, n) represents the checkerboard, where m represents the row number, n represents the column number, 1≤m≤7, 1≤n≤7; the locations of the thirty-seven groups of fuel assemblies are as follows:
   (1, 3), (1, 4), (1, 5);
   (2, 2), (2, 3), (2, 4), (2, 5), (2, 6);
   (3, 1), (3, 2), (3, 3), (3, 4), (3, 5), (3, 6), (3, 7);
   (4, 1), (4, 2), (4, 3), (4, 4), (4, 5), (4, 6), (4, 7);
   (5, 1), (5, 2), (5, 3), (5, 4), (5, 5), (5, 6), (5, 7);
   (6, 2), (6, 3), (6, 4), (6, 5), (6, 6);
   (7, 3), (7, 4), (7, 5).
the twenty-one control rods comprise four power compensation rods A, five reactivity adjustment rods B, four temperature adjustment rods R, and eight shutdown rods S, wherein,
the locations of the four power compensation rods A are: (2, 2), (2, 6), (6, 2), (6, 6), and the power of the reactor core is adjusted by adjusting the insertion depth of the power compensation rods A;
the locations of the five reactivity adjustment rods B are: (3, 3), (3, 5), (4, 4), (5, 3), (5, 5), and the changes in reactivity of the reactor core caused by fuel burn-up and changes in xenon concentration are compensated by adjusting the insertion depth of the reactivity adjustment rods B;
the locations of the four temperature adjustment rods R are: (2, 4), (4, 2), (4, 6), (6, 4), and the average temperature of the reactor core is adjusted by adjusting the insertion depth of the temperature adjustment rods R; and
the locations of the eight shutdown rods S are: (1, 3), (1, 5), (3, 1), (3, 7), (5, 1), (5, 7), (7, 3), (7, 5), and the shutdown rods S provides additional negative reactivity to ensure a sufficient shutdown depth during shutdown of the reactor core.

Further, in the small nuclear power reactor core of the present invention, adjusting the insertion depth of the power compensation rods A comprises synchronously adjusting the insertion depth of the four power compensation rods A;
adjusting the insertion depth of the reactivity adjustment rods B comprises synchronously adjusting the insertion depth of the five reactivity adjustment rods B; and
adjusting the insertion depth of the temperature adjustment rods R comprises simultaneously adjusting the insertion depth of the four temperature adjustment rods R.

Further, in the small nuclear power reactor core of the present invention, adjusting the power of the reactor core by adjusting the insertion depth of the power compensation rods A comprises that:
when the insertion depth of the power compensation rods A increases, the power of the reactor core is decreased, and when the insertion depth of the power compensation rods A is decreased, the power of the reactor core is increased.

Further, in the small nuclear power reactor core of the present invention, adjusting the average temperature of the reactor core by adjusting the insertion depth of the temperature adjusting rods R comprises that:
when the insertion depth of the temperature regulating rods R increases, the temperature of the reactor core decreases, and when the insertion depth of the temperature regulating rods R decreases, the temperature of the reactor core increases.

Further, the small nuclear power reactor core of the present invention includes a power control module, wherein when the power of the reactor core needs to be reduced, the insertion depth of the power compensation rods A is increased; when the power of the reactor core needs to be increased, the insertion depth of the power compensation rod A is reduced.

Further, the small nuclear power reactor core of the present invention includes a temperature monitoring module, wherein when the average temperature of the reactor core is monitored to be higher than a first preset temperature, the insertion of the temperature adjustment rods R is increased; when the average temperature of the reactor core is monitored to be lower than a second preset temperature, the insertion depth of the temperature adjustment rods R is reduced.

Further, in the small nuclear power reactor core of the present invention, the reactor core does not contain soluble boron; or the reactor core contains a small amount of soluble boron, and there is no need to adjust the concentration of soluble boron.

Further, the small nuclear power reactor core of the present invention includes a display for displaying the real-time insertion depths of the power compensation rods A, reactivity adjustment rods B, temperature adjustment rods R and shutdown rods S.

Further, in the small nuclear power reactor core of the present invention, the fuel assemblies are all of the same size.

In addition, the present invention further provides a ship, which includes the small nuclear power reactor core as described above.

Implementation of the small nuclear power reactor core of the present invention can provide the following advantages: the control rods are functionally grouped and their layout is designed such that no soluble boron is required. These functional control rods are respectively used to control the power, temperature, shutdown of the reactor core, and compensate for the changes in reactivity of the reactor core caused by fuel burn-up and changes in xenon concentration, thereby realizing the miniaturization of nuclear power plant cores.

### BRIEF DESCRIPTION OF THE DRAWINGS

The present invention will be further explained in the following, with reference to the attached drawings and embodiments, and in the drawings:

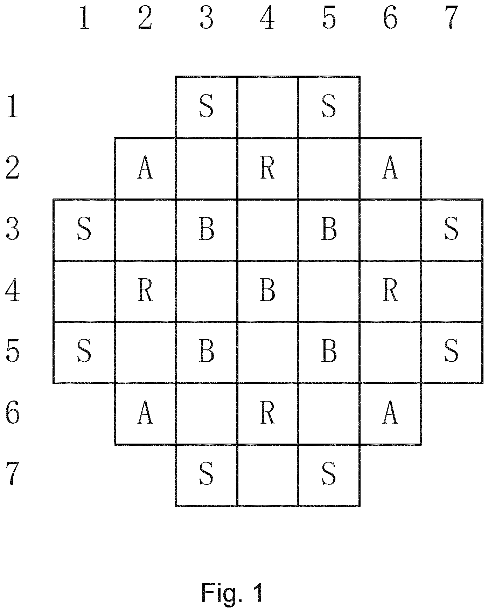

FIG. 1 is a schematic diagram of the layout of a small nuclear power reactor core according to an embodiment.

### DETAILED DESCRIPTION OF EMBODIMENTS

In order to have a clearer understanding of the technical features, objects and effects of the present invention, the specific embodiments of the present invention will now be described in detail with reference to the accompanying drawings.

### Embodiment 1

A small nuclear power reactor core of this embodiment includes a plurality of fuel assemblies arranged in an array, and a control rod group arranged according to a set rule. The control rod group includes:
A power compensation rod group for adjusting the power of the reactor core by adjusting an insertion depth of the power compensation rod group;
A reactivity adjustment rod group for compensating for the changes in reactivity of the reactor core due to the fuel burn-up and changes in xenon concentration by adjusting an insertion depth of the reactivity adjustment rod group;
A temperature adjustment rod group for adjusting an average temperature of the reactor core by adjusting an insertion depth of the temperature regulating rod group; and
A shutdown rod group for providing additional negative reactivity to ensure a sufficient shutdown depth during shutdown.

Reference can be made to the prior art for driving devices for controlling the insertion depth of the power compensation rod group, the reactivity adjustment rod group, the temperature adjustment rod group and the shutdown rod group.

In this embodiment, the control rods are functionally grouped and their layout is designed such that no soluble boron is required. These functional control rods are respectively used to control the power, temperature, shutdown of the reactor core and compensate for the changes in reactivity of the reactor core caused by fuel burn-up and changes in xenon concentration, thereby realizing the miniaturization of nuclear power plant cores.

### Embodiment 2

Referring to Fig. 1, the small nuclear power reactor core of this embodiment includes thirty-seven groups of fuel assemblies and twenty-one control rods. The control rods are all made of strong neutron absorbing materials to improve reactivity regulation capability. Existing PWR control rod assemblies use "gray rods" with weak neutron absorption capabilities, such as stainless steel rods, tungsten rods, etc., to minimize the influence on the axial power distribution when controlling the core power. The control rod is inserted into the fuel assembly at the same location. The thirty-seven groups of fuel assemblies are arranged in a 7×7 checkerboard pattern, (m, n) represents the location in the checkerboard, where m represents the row number, n represents the column number, 1≤m≤7, 1≤n≤7; for example, (1, 3) means row 1 and column 3. The locations of the thirty-seven groups of fuel assemblies are as follows:
(1,3), (1,4), (1,5);
(2,2), (2,3), (2,4), (2,5), (2,6);
(3,1), (3,2), (3,3), (3,4), (3,5), (3,6), (3,7);
(4,1), (4,2), (4,3), (4,4), (4,5), (4,6), (4,7);
(5,1), (5,2), (5,3), (5,4), (5,5), (5,6), (5,7);
(6,2), (6,3), (6,4), (6,5), (6,6);
(7,3), (7,4), (7,5).

The twenty-one control rods include four power compensation rods A, five reactivity adjustment rods B, four temperature adjustment rods R, and eight shutdown rods S.

The locations of the four power compensation rods A are: (2, 2), (2, 6), (6, 2), (6, 6). The power of the reactor core is adjusted by adjusting the insertion depth of the power compensation rods A. For the driving device for adjusting the insertion depth of the power compensation rods A, reference can be made to the prior art.

The locations of the five reactivity adjustment rods B are: (3, 3), (3, 5), (4, 4), (5, 3), (5, 5). The changes in reactivity of the reactor core due to fuel burn-up and changes in xenon concentration are compensated for by adjusting the insertion depth of the reactivity adjustment rods B. For the driving device for adjusting the insertion depth of the reactivity adjustment rods B, reference can be made to the prior art.

The locations of the four temperature adjustment rods R are: (2, 4), (4, 2), (4, 6), (6, 4). The average temperature of the reactor core is adjusted by adjusting the insertion depth of the temperature adjustment rods R. For the driving device for adjusting the insertion depth of the temperature adjustment rods R, reference can be made to the prior art.

The locations of the eight shutdown rods S are: (1, 3), (1, 5), (3, 1), (3, 7), (5, 1), (5, 7), (7, 3), (7, 5). The shutdown rods S are used to provide additional negative reactivity to ensure a sufficient shutdown depth during shutdown, and the shutdown conditions are such that the core is made subcritical. The reactor core shuts down after all shutdown rods S are inserted. For the driving device for adjusting the insertion depth of the shutdown rod S, reference may be made to the prior art.

As an example, in the small nuclear power reactor core of this embodiment, adjusting the insertion depth of the power compensation rods A may include synchronously adjusting the insertion depth of the four power compensation rods A.

Adjusting the insertion depth of the reactivity adjusting rods B may include: simultaneously adjusting the insertion depth of the five reactivity adjusting rods B.

Adjusting the insertion depth of the temperature adjustment rods R may include synchronously adjusting the insertion depth of the four temperature adjustment rods R.

As an example, in the small nuclear power reactor core of this embodiment, adjusting the power of the reactor core by adjusting the insertion depth of the power compensation rods A includes:
When the insertion depth of the power compensation rods A increases, the power of the reactor core is reduced, and when the insertion depth of the power compensation rods A decreases, the power of the reactor core is increased.

As an example, in the small nuclear power reactor core of the present embodiment, adjusting the average temperature of the reactor core by adjusting the insertion depth of the temperature adjusting rods R includes:
When the insertion depth of the temperature regulating rods R increases, the temperature of the reactor core is decreased, and when the insertion depth of the temperature regulating rods R decreases, the temperature of the reactor core is increased.

As an example, the small nuclear power reactor core of this embodiment further includes a power control module, which increases the insertion depth of the power compensation rods A when the power of the reactor core needs to be reduced, and decreases the insertion depth of the power compensation rods A when the power of the reactor core needs to be increased.

As an example, the small nuclear power reactor core of this embodiment further includes a temperature monitoring module. When the average temperature of the reactor core is monitored to be higher than a first preset temperature, the insertion depth of the temperature adjustment rods R is increased; when the average temperature of the core is monitored to be lower than a second preset temperature, the insertion depth of the temperature adjustment rods R is reduced.

As an example, in the small nuclear power reactor core of this embodiment, the reactor core does not contain soluble boron.

Alternatively, in the small nuclear power reactor core of this embodiment, a small amount of soluble boron is contained in the reactor core, and there is no need to adjust the concentration of soluble boron.

As an example, the small nuclear power reactor core of this embodiment further includes a display for displaying the real-time insertion depths of the power compensation rods A, the reactivity adjustment rods B, the temperature adjustment rods R, and the shutdown rods S.

As an example, in the small nuclear power reactor core of the present embodiment, all fuel assemblies are of the same size.

In this embodiment, the control rods are functionally grouped and their layout is designed such that no soluble boron is required. These functional control rods are respectively used to control the power, temperature, shutdown of the reactor core and compensate for the changes in reactivity of the reactor core caused by fuel burn-up and changes in xenon concentration, thereby realizing the miniaturization of nuclear power plant cores. In addition, the present invention cancels the axial power distribution control. Although the control rods have limited adjustment ability, the linear power density of the core is low. Therefore, even the axial power distribution control is canceled, the axial power distribution of the core under various normal operation and accident conditions can still ensure core safety.

### Embodiment 3

A ship according to this embodiment includes the small nuclear power reactor core as described in the above embodiment 2. Considering the characteristics of the compact design of the marine reactor structure, the narrow space on the ship, and the restriction in discharge of radioactive waste, the main purpose of this embodiment is to provide a reasonable layout and functional grouping of the control rods, and provide a core control mode to meet all reactivity control requirements for core operation, adjustment and shutdown. The small nuclear power reactor core of the ship in this embodiment can provide sufficient power and heat supply for the exploitation of marine resources, the defense of islands and reefs, the living and production of island residents.

In this embodiment, the control rods are functionally grouped and their layout is designed such that no soluble boron is required. These functional control rods are respectively used to control the power, temperature, shutdown of the reactor core, and compensate for the changes in reactivity of the reactor core caused by fuel burn-up and changes in xenon concentration, thereby realizing the miniaturization of nuclear power plant cores.

The various embodiments in this specification are described in a progressive manner, and each embodiment focuses on the differences from other embodiments, and the same and similar parts between the various embodiments can be referred to each other. As for the devices disclosed in the embodiments, since they correspond to the method disclosed in the embodiments, their descriptions are relatively concise, and the relevant part can refer to the description of the method.

People skilled in the art may further realize that the units and algorithm steps of each example described in conjunction with the embodiments disclosed herein can be implemented in electronic hardware, computer software, or a combination of the two. In order to clearly illustrate the interchangeability of hardware and software, the above description has generally described the components and steps of each example in terms of functionality. Whether these functions are performed in hardware or software depends on the specific application and design constraints of the technical solution. People skilled in the art may implement the described functionality using different methods for each particular application, but such implementations should not be considered beyond the scope of the present invention.

The steps of a method or algorithm described in conjunction with the embodiments disclosed herein may be directly implemented in hardware, a software module executed by a processor, or a combination of the two. Software modules can be stored in random access memory (RAM), internal memory, read only memory (ROM), electrically programmable ROM, electrically erasable programmable ROM, registers, hard disk, removable disk, CD-ROM, or any other form of storage medium known in the art.

The above embodiments are only intended to illustrate the technical concepts and characteristics of the present invention, and the purpose is to enable those skilled in the art to understand the contents of the present invention and implement accordingly, and the above embodiments shall not be used to limit the protection scope of the present invention.

## Claims

1. A small nuclear power reactor core, comprising a plurality of fuel assemblies arranged in an array, and a control rod group arranged according to a set rule; wherein the control rod group comprises:
a power compensation rod group for adjusting a power of the reactor core by adjusting an insertion depth of the power compensation rod group;
a reactivity adjustment rod group for compensating for changes in reactivity of the reactor core caused by fuel burn-up and changes in xenon concentration by adjusting an insertion depth of the reactivity adjustment rod group;
a temperature adjustment rod group for adjusting an average temperature of the reactor core by adjusting an insertion depth of the temperature adjustment rod group; and
a shutdown rod group for providing additional negative reactivity to ensure a sufficient shutdown depth during shutdown of the reactor core,
**characterised in that** the fuel assemblies comprise thirty-seven groups of fuel assemblies, and the control rod group comprises twenty-one control rods;
wherein the control rods are all made of strong neutron absorbing material, and the control rods are inserted into the fuel assemblies in the same location; the thirty-seven groups of fuel assemblies are arranged in a 7×7 checkerboard pattern, (m, n) represents the checkerboard, where m represents the row number, n represents the column number, 1≤m≤7, 1≤n≤7; the locations of the thirty-seven groups of fuel assemblies are as follows:
(1, 3), (1, 4), (1, 5);
(2, 2), (2, 3), (2, 4), (2, 5), (2, 6);
(3, 1), (3, 2), (3, 3), (3, 4), (3, 5), (3, 6), (3, 7);
(4, 1), (4, 2), (4, 3), (4, 4), (4, 5), (4, 6), (4, 7);
(5, 1), (5, 2), (5, 3), (5, 4), (5, 5), (5, 6), (5, 7);
(6, 2), (6, 3), (6, 4), (6, 5), (6, 6);
(7, 3), (7, 4), (7, 5).
the twenty-one control rods comprise four power compensation rods A, five reactivity adjustment rods B, four temperature adjustment rods R, and eight shutdown rods S, wherein,
the locations of the four power compensation rods A are: (2, 2), (2, 6), (6, 2), (6, 6), and the power of the reactor core is adjusted by adjusting the insertion depth of the power compensation rods A;
the locations of the five reactivity adjustment rods B are: (3, 3), (3, 5), (4, 4), (5, 3), (5, 5), and the changes in reactivity of the reactor core caused by fuel burn-up and changes in xenon concentration are compensated for by adjusting the insertion depth of the reactivity adjustment rods B;
the locations of the four temperature adjustment rods R are: (2, 4), (4, 2), (4, 6), (6, 4), and the average temperature of the reactor core is adjusted by adjusting the insertion depth of the temperature adjustment rods R; and
the locations of the eight shutdown rods S are: (1, 3), (1, 5), (3, 1), (3, 7), (5, 1), (5, 7), (7, 3), (7, 5), and the shutdown rods S provides additional negative reactivity to ensure a sufficient shutdown depth during shutdown of the reactor core.

2. The small nuclear power reactor core according to claim 1, **characterized in that** adjusting the insertion depth of the power compensation rods A comprises synchronously adjusting the insertion depth of the four power compensation rods A;
adjusting the insertion depth of the reactivity adjustment rods B comprises synchronously adjusting the insertion depth of the five reactivity adjustment rods B; and
adjusting the insertion depth of the temperature adjustment rods R comprises simultaneously adjusting the insertion depth of the four temperature adjustment rods R.

3. The small nuclear power reactor core according to claim 1, **characterized in that** adjusting the power of the reactor core by adjusting the insertion depth of the power compensation rods A comprises:
when the insertion depth of the power compensation rods A increases, the power of the reactor core is decreased, and when the insertion depth of the power compensation rods A is decreased, the power of the reactor core is increased.

4. The small nuclear power reactor core according to claim 1, **characterized in that** adjusting the average temperature of the reactor core by adjusting the insertion depth of the temperature adjusting rods R comprises:
when the insertion depth of the temperature regulating rods R increases, the temperature of the reactor core decreases, and when the insertion depth of the temperature regulating rods R decreases, the temperature of the reactor core increases.

5. The small nuclear power reactor core according to claim 1, further comprising a power control module, wherein when the power of the reactor core needs to be reduced, the insertion depth of the power compensation rods A is increased; when the power of the reactor core needs to be increased, the insertion depth of the power compensation rod A is reduced.

6. The small nuclear power reactor core according to claim 1, further comprising a temperature monitoring module, wherein when the average temperature of the reactor core is monitored to be higher than a first preset temperature, the insertion of the temperature adjustment rods R is increased; when the average temperature of the reactor core is monitored to be lower than a second preset temperature, the insertion depth of the temperature adjustment rods R is reduced.

7. The small nuclear power reactor core of claim 1, **characterized in that** the reactor core does not contain soluble boron; or
the reactor core contains a small amount of soluble boron, and there is no need to adjust the concentration of soluble boron.

8. The small nuclear power reactor core according to claim 1, further comprising a display for displaying the real-time insertion depths of the power compensation rods A, reactivity adjustment rods B, temperature adjustment rods R and shutdown rods S.

9. The small nuclear power reactor core according to claim 1, **characterized in that** the fuel assemblies are all of the same size.

10. A ship, **characterized by** comprising the small nuclear power reactor core according to any one of claims 1 to 9.

## Patentansprüche

1. Kleiner Kern eines Kernkraftreaktors, umfassend eine Vielzahl von Brennelementen, die in einem Array angeordnet sind, und eine Steuerstabgruppe, die gemäß einer festgelegten Regel angeordnet ist; wobei die Steuerstabgruppe Folgendes umfasst:
eine Leistungskompensationsstabgruppe zum Einstellen einer Leistung des Reaktorkerns durch Einstellen einer Einführtiefe der Leistungskompensationsstabgruppe;
eine Reaktivitätseinstellstabgruppe zum Kompensieren von Änderungen der Reaktivität des Reaktorkerns, die durch Brennstoffverbrennung verursacht werden, und von Änderungen der Xenonkonzentration durch Einstellen einer Einführtiefe der Reaktivitätseinstellstabgruppe;
eine Temperatureinstellstabgruppe zum Einstellen einer Durchschnittstemperatur des Reaktorkerns durch Einstellen einer Einführtiefe der Temperatureinstellstabgruppe; und
eine Abschaltstabgruppe zum Bereitstellen von zusätzlicher negativer Reaktivität, um eine ausreichende Abschalttiefe beim Abschalten des Reaktorkerns zu gewährleisten,
**dadurch gekennzeichnet, dass** die Brennelemente siebenunddreißig Gruppen von Brennelementen umfassen und die Steuerstabgruppe einundzwanzig Steuerstäbe umfasst;
wobei die Steuerstäbe alle aus stark neutronenabsorbierendem Material bestehen und die Steuerstäbe an derselben Stelle in die Brennelemente eingeführt sind; die siebenunddreißig Gruppen von Brennelementen in einem 7×7-Schachbrettmuster angeordnet sind, (m, n) das Schachbrett darstellt, wobei m die Zeilenzahl darstellt, n die Spaltenzahl darstellt, 1≤m≤7, 1≤n≤7; wobei die Stellen der siebenunddreißig Gruppen von Brennelementen wie folgt sind:
(1, 3), (1, 4), (1, 5);
(2, 2), (2, 3), (2, 4), (2, 5), (2, 6);
(3, 1), (3, 2), (3, 3), (3, 4), (3, 5), (3, 6), (3, 7);
(4, 1), (4, 2), (4, 3), (4, 4), (4, 5), (4, 6), (4, 7);
(5, 1), (5, 2), (5, 3), (5, 4), (5, 5), (5, 6), (5, 7);
(6, 2), (6, 3), (6, 4), (6, 5), (6, 6);
(7, 3), (7, 4), (7, 5)
wobei die einundzwanzig Steuerstäbe vier Leistungskompensationsstäbe A, fünf Reaktivitätseinstellstäbe B, vier Temperatureinstellstäbe R und acht Abschaltstäbe S umfassen, wobei,
die Stellen der vier Leistungskompensationsstäbe A folgende sind: (2, 2), (2, 6), (6, 2), (6, 6) und die Leistung des Reaktorkerns durch Einstellen der Einführtiefe der Leistungskompensationsstäbe A eingestellt wird;
die Stellen der fünf Reaktivitätseinstellstäbe B folgende sind: (3, 3), (3, 5), (4, 4), (5, 3), (5, 5) und die Änderungen der Reaktivität des Reaktorkerns, die durch Brennstoffverbrennung verursacht werden, und die Änderungen der Xenonkonzentration durch Einstellen der Einführtiefe der Reaktivitätseinstellstäbe B kompensiert werden;
die Stellen der vier Temperatureinstellstäbe R folgende sind: (2, 4), (4, 2), (4, 6), (6, 4) und die Durchschnittstemperatur des Reaktorkerns durch Einstellen der Einführtiefe der Temperatureinstellstäbe R eingestellt wird; und
die Stellen der acht Abschaltstäbe S folgende sind: (1, 3), (1, 5), (3, 1), (3, 7), (5, 1), (5, 7), (7, 3), (7, 5) und die Abschaltstäbe S eine zusätzliche negative Reaktivität bereitstellen, um eine ausreichende Abschalttiefe beim Abschalten des Reaktorkerns zu gewährleisten.

2. Kleiner Kern eines Kernkraftreaktors nach Anspruch 1, **dadurch gekennzeichnet, dass** das Einstellen der Einführtiefe der Leistungskompensationsstäbe A synchrones Einstellen der Einführtiefe der vier Leistungskompensationsstäbe A umfasst;
das Einstellen der Einführtiefe der Reaktivitätseinstellstäbe B synchrones Einstellen der Einführtiefe der fünf Reaktivitätseinstellstäbe B umfasst; und
das Einstellen der Einführtiefe der Temperatureinstellstäbe R gleichzeitiges Einstellen der Einführtiefe der vier Temperatureinstellstäbe R umfasst.

3. Kleiner Kern eines Kernkraftreaktors nach Anspruch 1, **dadurch gekennzeichnet, dass** das Einstellen der Leistung des Reaktorkerns durch Einstellen der Einführtiefe der Leistungskompensationsstäbe A Folgendes umfasst:
wenn sich die Einführtiefe der Leistungskompensationsstäbe A erhöht, wird die Leistung des Reaktorkerns verringert und, wenn sich die Einführtiefe der Leistungskompensationsstäbe A verringert wird, wird die Leistung des Reaktorkerns erhöht.

4. Kleiner Kern eines Kernkraftreaktors nach Anspruch 1, **dadurch gekennzeichnet, dass** das Einstellen der Durchschnittstemperatur des Reaktorkerns durch Einstellen der Einführtiefe der Temperatureinstellstäbe R Folgendes umfasst:
wenn sich die Einführtiefe der Temperaturregelstäbe R erhöht, verringert sich die Temperatur des Reaktorkerns und, wenn sich die Einführtiefe der Temperaturregelstäbe R verringert, erhöht sich die Temperatur des Reaktorkerns.

5. Kleiner Kern eines Kernkraftreaktors nach Anspruch 1, ferner umfassend ein Leistungssteuermodul, wobei, wenn die Leistung des Reaktorkerns reduziert werden muss, die Einführtiefe der Leistungskompensationsstäbe A erhöht wird; wenn die Leistung des Reaktorkerns erhöht werden muss, die Einführtiefe der Leistungskompensationsstäbe A reduziert wird.

6. Kleiner Kern eines Kernkraftreaktors nach Anspruch 1, ferner umfassend ein Temperaturbeobachtungsmodul, wobei, wenn beobachtet wird, dass die Durchschnittstemperatur des Reaktorkerns höher als eine erste zuvor festgelegte Temperatur ist, die Einführung der Temperatureinstellstäbe R erhöht wird; wenn beobachtet wird, dass die Durchschnittstemperatur des Reaktorkerns niedriger als eine zweite zuvor festgelegte Temperatur ist, die Einführtiefe der Temperatureinstellstäbe R reduziert wird.

7. Kleiner Kern eines Kernkraftreaktors nach Anspruch 1, **dadurch gekennzeichnet, dass** der Reaktorkern kein lösliches Bor enthält; oder
der Reaktorkern eine geringe Menge an löslichem Bor enthält und die Konzentration an löslichem Bor nicht eingestellt werden muss.

8. Kleiner Kern eines Kernkraftreaktors nach Anspruch 1, ferner umfassend eine Anzeige zum Anzeigen der Echtzeit-Einführtiefen der Leistungskompensationsstäbe A, der Reaktivitätseinstellstäbe B, der Temperatureinstellstäbe R und der Abschaltstäbe S.

9. Kleiner Kern eines Kernkraftreaktors nach Anspruch 1, **dadurch gekennzeichnet, dass** die Brennelemente alle gleich groß sind.

10. Schiff, **dadurch gekennzeichnet, dass** es den kleinen Kern eines Kernkraftreaktors nach einem der Ansprüche 1 bis 9 umfasst.

## Revendications

1. Cœur de réacteur nucléaire de petite taille, comprenant une pluralité d'assemblages de combustibles disposés en réseau, et un groupe de tiges de commande disposé selon une règle établie ; dans lequel le groupe de tiges de commande comprend :
un groupe de tiges de compensation de puissance pour ajuster la puissance du cœur du réacteur en ajustant la profondeur d'insertion du groupe de tiges de compensation de puissance ;
un groupe de tiges d'ajustement de réactivité pour compenser les changements de réactivité du cœur du réacteur causés par la combustion du combustible et les changements de concentration en xénon en ajustant une profondeur d'insertion du groupe de tiges d'ajustement de réactivité ;
un groupe de tiges d'ajustement de température pour ajuster une température moyenne du cœur du réacteur en ajustant une profondeur d'insertion du groupe de tiges d'ajustement de température ; et
un groupe de tiges d'arrêt pour la fourniture d'une réactivité négative supplémentaire afin de garantir une profondeur d'arrêt suffisante pendant l'arrêt du cœur du réacteur,
**caractérisé en ce que** les assemblages de combustibles comprennent trente-sept groupes d'assemblages de combustibles, et le groupe de tiges de commande comprend vingt et une tiges de commande ;
dans lequel les tiges de commande sont toutes constituées d'un matériau absorbant fortement les neutrons, et les tiges de commande sont insérées dans les assemblages de combustibles au même endroit ; les trente-sept groupes d'assemblages de combustibles sont disposés selon un motif en damier 7×7, (m, n) représente le damier, où m représente le numéro de ligne, n représente le numéro de colonne, 1≤m≤7, 1≤n≤7 ; les emplacements des trente-sept groupes d'assemblages de combustibles sont les suivants :
(1, 3), (1, 4), (1, 5) ;
(2, 2), (2, 3), (2, 4), (2, 5), (2, 6) ;
(3, 1), (3, 2), (3, 3), (3, 4), (3, 5), (3, 6), (3, 7) ;
(4, 1), (4, 2), (4, 3), (4, 4), (4, 5), (4, 6), (4, 7) ;
(5, 1), (5, 2), (5, 3), (5, 4), (5, 5), (5, 6), (5, 7) ;
(6, 2), (6, 3), (6, 4), (6, 5), (6, 6) ;
(7, 3), (7, 4), (7, 5).
les vingt et une tiges de commande comprennent quatre tiges de compensation de puissance A, cinq tiges d'ajustement de réactivité B, quatre tiges d'ajustement de température R et huit tiges d'arrêt S, dans lequel,
les emplacements des quatre tiges de compensation de puissance A sont : (2, 2), (2, 6), (6, 2), (6, 6), et la puissance du cœur du réacteur est ajustée en ajustant la profondeur d'insertion des tiges de compensation de puissance A ;
les emplacements des cinq tiges d'ajustement de réactivité B sont : (3, 3), (3, 5), (4, 4), (5, 3), (5, 5), et les changements de réactivité du cœur du réacteur causés par la combustion du combustible et les changements de concentration en xénon sont compensés en ajustant la profondeur d'insertion des tiges d'ajustement de réactivité B ;
les emplacements des quatre tiges d'ajustement de température R sont : (2, 4), (4, 2), (4, 6), (6, 4), et la température moyenne du cœur du réacteur est ajustée en ajustant la profondeur d'insertion des tiges d'ajustement de température R ; et
les emplacements des huit tiges d'arrêt S sont : (1, 3), (1, 5), (3, 1), (3, 7), (5, 1), (5, 7), (7, 3), (7, 5), et les tiges d'arrêt S fournissent une réactivité négative supplémentaire pour assurer une profondeur d'arrêt suffisante pendant l'arrêt du cœur du réacteur.

2. Cœur de réacteur nucléaire de petite taille selon la revendication 1, **caractérisé en ce que** l'ajustement de la profondeur d'insertion des tiges de compensation de puissance A comprend l'ajustement synchrone de la profondeur d'insertion des quatre tiges de compensation de puissance A ;
l'ajustement de la profondeur d'insertion des tiges d'ajustement de réactivité B comprend l'ajustement synchrone de la profondeur d'insertion des cinq tiges d'ajustement de réactivité B ; et
l'ajustement de la profondeur d'insertion des tiges d'ajustement de température R comprend l'ajustement simultané de la profondeur d'insertion des quatre tiges d'ajustement de température R.

3. Cœur de réacteur nucléaire de petite taille selon la revendication 1, **caractérisé en ce que** l'ajustement de la puissance du cœur du réacteur par ajustement de la profondeur d'insertion des tiges de compensation de puissance A comprend :
lorsque la profondeur d'insertion des tiges de compensation de puissance A augmente, la puissance du cœur du réacteur est diminuée, et lorsque la profondeur d'insertion des tiges de compensation de puissance A est diminué, la puissance du cœur du réacteur augmente.

4. Cœur de réacteur nucléaire de petite taille selon la revendication 1, **caractérisé en ce que** l'ajustement de la température moyenne du cœur du réacteur par ajustement de la profondeur d'insertion des tiges d'ajustement de température R comprend :
lorsque la profondeur d'insertion des tiges d'ajustement de température R augmente, la température du cœur du réacteur diminue, et lorsque la profondeur d'insertion des tiges d'ajustement de température R diminue, la température du cœur du réacteur augmente.

5. Cœur de réacteur nucléaire de petite taille selon la revendication 1, comprenant en outre un module de commande de la puissance, dans lequel lorsque la puissance du cœur du réacteur doit être réduite, la profondeur d'insertion des tiges de compensation de puissance A est augmentée ; lorsque la puissance du cœur du réacteur doit être augmentée, la profondeur d'insertion de la tige de compensation de puissance A est réduite.

6. Petit cœur de réacteur nucléaire selon la revendication 1, comprenant également un module de surveillance de la température, dans lequel lorsque la température moyenne du cœur du réacteur est détectée comme étant supérieure à une première température prédéfinie, l'insertion des tiges d'ajustement de température R est augmentée ; lorsque la température moyenne du cœur du réacteur est détectée comme étant inférieure à une seconde température prédéfinie, la profondeur d'insertion des tiges d'ajustement de température R est réduite.

7. Cœur de réacteur nucléaire de petite taille selon la revendication 1, **caractérisé en ce que** le cœur du réacteur ne contient pas de bore soluble ; ou
le cœur du réacteur contient une petite quantité de bore soluble et il n'est pas nécessaire d'ajuster la concentration de bore soluble.

8. Cœur de réacteur nucléaire de petite taille selon la revendication 1, comprenant également un affichage pour afficher les profondeurs d'insertion en temps réel des tiges de compensation de puissance A, des tiges d'ajustement de réactivité B, des tiges d'ajustement de température R et des tiges d'arrêt S.

9. Cœur de réacteur nucléaire de petite taille selon la revendication 1, **caractérisé en ce que** les assemblages de combustibles sont tous de même taille.

10. Vaisseau, **caractérisé en ce qu'**il comprend le cœur d'un réacteur nucléaire de petite taille selon l'une quelconque des revendications 1 à 9.
